**Europäisches Patentamt**

**European Patent Office**

**Office européen des brevets**

(19)

(11) **EP 1 122 325 A2**

(12) # EUROPEAN PATENT APPLICATION

(43) Date of publication:
**08.08.2001 Bulletin 2001/32**

(51) Int Cl.7: **C22B 60/02**, G21C 19/48,
G21F 7/04, C25C 3/34

(21) Application number: **00101954.6**

(22) Date of filing: **01.02.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Euratom**<br>**2920 Luxembourg (LU)**<br><br>(72) Inventors:<br>• **Pernel, Carole**<br>**67630 Scheibenhard (FR)** | • **Koch, Lothar, Dr.**<br>**76356 Weingarten (DE)**<br>• **Koyama, Tadafumi, Dr.**<br>**76133 Karlsruhe (DE)**<br><br>(74) Representative:<br>**Strych, Werner Maximilian Josef, Dr. et al**<br>**Hansmann & Vogeser,**<br>**Patent- und Rechtsanwälte,**<br>**Albert-Rosshaupter-Strasse 65**<br>**81369 München (DE)** |

(54) **Electrorefining of americium**

(57) Described is a process for the separation of americium metal from spent fuel or chlorinated high level waste of fuel reprocessing by using a liquid electrode electrode whereby americium will be obtained in high yields.

Fig. 1

## Description

The present invention relates to the americium recovery from rare earth fission products by electrorefining and an apparatus for performing said recovery.

There is presently a surplus of low cost U ores which could fuel the presently deployed light water reactor ((LWR) for the next fifty years. Moreover, enriched U released from military stock piles is becoming gradually available. Despite the low use of U for electricity generation in LWR of about 1% compared to fast breeder reactors (FBR) which would improve the use of U by a factor of 80, the current high cost of Pu separation make this reactor non-competitive with the cheap LWR fuel.

If the green house effect restricts the future use of fossil fuels and if no other substitutes for energy generation exist then the use of nuclear energy and demand for U would increase and consequently introduce fast reactors sooner. In such a scenario a partitioning and transmutation (P&T) concept could be realised which can reduce the long-term radiotoxicity of the nuclear waste.

Although suitable aqueous processes have been developed to treat spent nuclear fuel by separating out, not only Pu-U (Purex process) but also all long-lived radiotoxic nuclides (Diamex, Truex, Sanex) the pyrochemical reprocessing is advantageous. Due to its compactness, such a process could be attached to each power station, thus reducing the need for spent fuel transportation to a central large scale reprocessing plant. Also, a pyrochemical process would allow a speedy reprocessing which would eliminate the out of pile fuel inventory and reduce the $^{241}$Am build up due to $^{241}$Pu decay.

There have been developed two pyrochemical processes for the separation of Pu-U from spent fuel by elctrolysis in molten chlorides, firstly as metals and secondly as oxides. In order to extend the application to a P&T scheme, they have to be supplemented with the separation of minor actinides (MA). Neptunium with chemical properties similar to U and Pu is not difficult to separate. However, the transplutonium elements, especially americium exhibit standard free energies or electropotentials, which are close to the rare earth elements (RE) and the MA/RE separation is very difficult.

This inherent difficulty in oxides electrolysis led to redesign the process by including a fractionated precipitation of transplutonium oxides in order to separate these from the rare earth elements. Similar is the situation in the electrorefining of minor actinide metals. It is also known that the complete separation of Am from rare earth elements seem to be an surmountable obstacle. The solution to said problem is an initial electrorefining of U and Pu followed by a multistage reductive extraction of the minor actinides, particularly americium from rare earths.

In neither case, the fractional precipitation of the oxides and the multistage extraction of americium metal are the ideal solution compared to the electrochemical separation of americium together with the other actinides.

Therefore the object of the present application is to achieve a high yielding americium separation free of lanthanides by a simpler separation method.

Said object is solved by the features of valid claims 1 and 5. Preferred embodiments can be derived from the dependent subclaims.

According to the present invention a process for the partition of americium metal for rare earth fission products by electrorefining is provided wherein the formed americium metal in a liquid metal electrode is reduced by the exchange of the liquid metal electrode and recovering the americium from the electrode.

By the use of a liquid metal electrode the problems obtained with the americium recovery by electrolysis in molten chloride salts are avoided. A possible explanation for the difficulty are the low differences between the free standard energies of the formation of americum chloride and lanthanide chlorides, and secondly the multivalency in such media of americium which can appear as dichloride or trichloride.

According to the present invention and in order to reduce the disproportion

$$Am + 2AmCl_3 <<>>3\ AmCl_2 \qquad (I)$$

due to the formation of americium metal during the electrolysis the reduction of the separated americum metals in a liquid electrode is drastically reduced by the exchange of the liquid metal electrode. In this way a more than 99% separation yield free of lanthanides of americium from the liquid metal electrode is obtainable.

According to the present invention it has been found that the exchange of the liquid metal electrode can be carried out in a continuos or discontinuous manner. The americium separation is achieved in the discontinuous mode by replacing the electrode for a fixed potential when the americium step position stops and no significant amounts of lanthanides are deposited yet. Then, a fresh electrode is inserted to continue the electrolysis. This operation is finished when the americium content in the melt is below the concentration equivalent to recovery yield of about 99,5%.

In the continuous mode gravity or air lift removes the liquid metal americium alloy. From said alloy the americium can be separated by processes known in the art.

It has been found by the inventors of the present application that the use of Cd or Bi liquid metal cathodes as the electrodes eliminates further the disturbances advantageously with regard to the disproportion of deposited americium metal with americium trichloride to americium dichloride with an electrochemical potential close to the lanthanides and gives a high yield of pure americium.

In this regard it should be taken into consideration that the multivalency of americium prevents the sufficiently high recovery yield by electrorefining. If the above equation I is valid a solution of this problem would be to shift the equilibrium in favour of americium trichloride which has a predicted potential more separated from the potential of lanthanide trichloride than americium dichloride.

Considering the mass law where $a_x$ is the activity of the compound X which is equal to the product of the activity coefficient y and the concentration c of X

$$a_x = \gamma_x \bullet c_{x.} \qquad \text{(III)}$$

americum trichloride is favoured if the activity of americium metal is decreased.

Hence, according to equation (III) the activity coefficient or the concentration have to be reduced. The use of a liquid metal (Cd or Bi) electrode reduces the activity coefficient of americium metal drastically. Moreover there are no losses of the deposited metal due to its pure adherence to a solid electrode. Americium metal when formed at the surface of the liquid electrode is transported directly into the bulk of the cadmium, limiting the reaction between americium metal and americium trichloride (eq. I). In order to eliminate this reaction at all according to the invention the liquid should preferably be continuously withdrawn. Consequently, as in the process for residual U and Pu metal recovery, the most suitable electrode for americium recovery of electrorefining will be a liquid metal electrode.

Under the assumption that at any time the molten salt phase is in thermodynamic equilibrium with the liquid composing the electrode then the main results of the liquid extraction experiments in molten media would provide very useful information for determining the optimal condition for americium electrorefining.

In order to compare the distribution coefficients $D_x$ for an individual element X there have been calculated using published separation factors $SF_{nd}(X)$ of a reductive extraction, where, from a LiCl-KCl eutectic mixture at 773 K the actinides are extracted into Cd or Bi following a reduction with Li.

It has been found that there are larger separation factors ($SF_{nd}(X) = D_x/D_{ND}$) for Bi in comparison to Cd extraction. This detection is further supported by activity coefficient measurement which show that americium has a lower activity coefficient in liquid Bi than in liquid Cd. This, in turn, exhibits that americium metal is more stable and hence more easily separated from the salt melt by liquid Bi. It is therefore preferred and in order to further improve the electrorefining process of actinide metals to replace the Cd electrode by a Bi electrode.

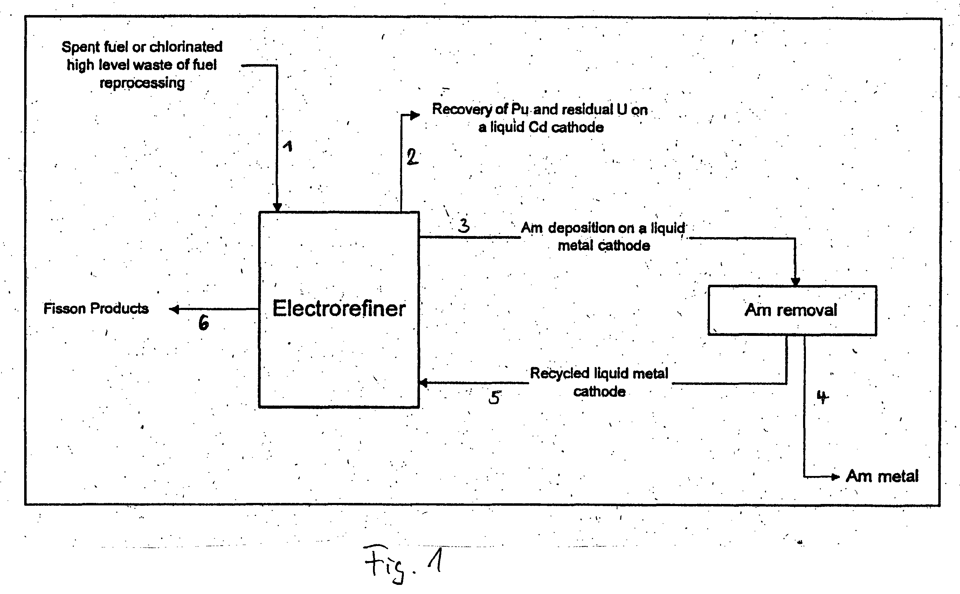

A schematic electrorefining process according to the present invention will be described now in more detail with respect to Figure 1.

Spent fuel of light water reactors or chlorinated high level waste of fuel reprocessing is charged in the electrorefining apparatus over line or tube 1. Under an inert atmosphere, especially an argon atmosphere, the spent fuel is subjected to electrolysis by using a solid iron electrode and a liquid metal electrode such as Cd and Bi. Over line or tube 2 Pu and residual U on a liquid Cd electrode are recovered. The americium deposition on a liquid metal electrode will be continuously or discontinuously withdrawn from the electrorefining apparatus and directed to a device for americium removal. After the separation of americium by a method known in the art the americium metal will be withdrawn over line or tube 4 to a container whereas the recycled liquid metal electrode will be transported over line or tube 5 back to the electrorefining apparatus for reuse. Fission products which do not contain the elements of interest are transported over line or tube 6 to a waste container to deposition.

As evident these experiments to separate americium from spent fuel require extreme conditions. Due to the high radiotoxicity and specific activity of americium, the use an $\alpha$-tight hot-cell or glove box with lead shielding and containment to protect personal from y radiation and radionuclide incorporation is needed to handle even milligram quantities. Due to the hygroscopic nature of LiCl-KC, which retains water up to 500°C, actinide oxide ions and HCl can be formed. In addition traces of oxygen can interfere with the process by oxidising certain elements and by forming emulsions at the molten salts/molten metal interface, which hamper the exchange reaction between the two phases. Therefore, and as already mentioned, the experiments have to be carried out in an inert gas atmosphere.

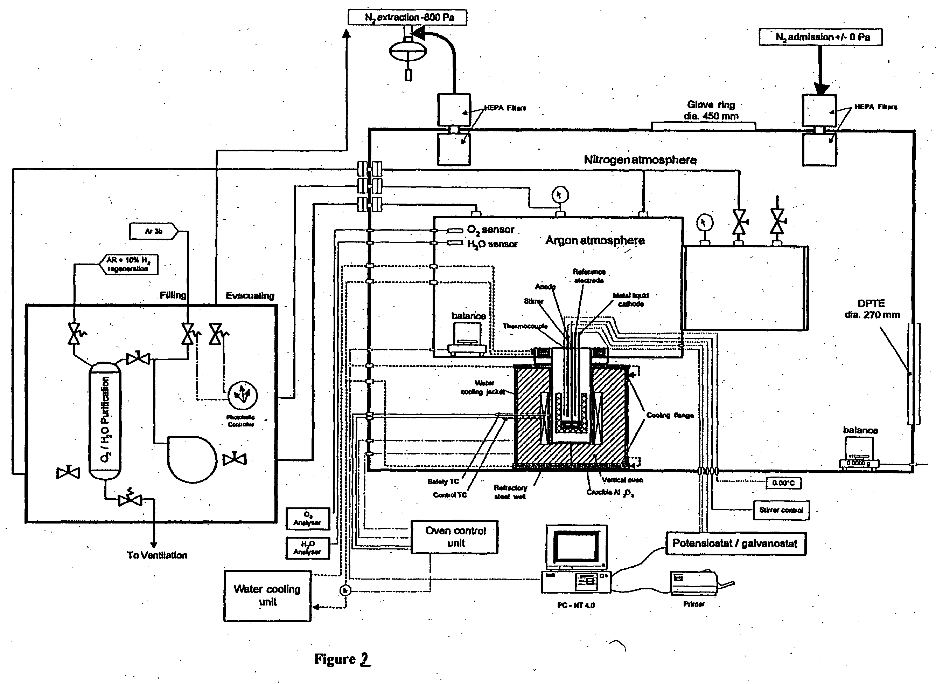

In order to carry out the experiments, a special installation has been designed and constructed. Figure 2 shows the complete system consisting of a double glove box and an argon purification unit. The pyrometallurgical experiments will be carried out inside a heating well of 100 mm diameter fitted into the bottom of the inner glove box under an argon atmosphere. The molten salt and the metal samples are prepared for analytical analysis in the outer box. The concentrations of oxygen and water will be limited to less than 10 ppm each by control devices in the inner glove boxes. The low oxygen and water levels are maintained by metal catalyst and molecular sieve traps in the argon circulation system. All operation are done under a lead shielding. Work with spent fuel or high level waste of reprocessing will be carried out in a hot-cell equipped with telemanipulators.

**Claims**

**1.** A process for the partition of americium metal from rare earth fission products by electrorefining

characterised in that
the formed americium metal in a liquid metal electrode will be reduced by the exchange by the liquid metal electrode and thereafter recovering the americium metal from the alloy is recovered.

**2.** The process according to claim 1
characterised in that
the exchange of the liquid metal electrode is carried out in a continuous or discontinuous manner.

**3.** The process according to claims 1 or 2
characterised in that
the liquid metal electrode is a Cd or a Bi electrode.

**3.** The process according to one of claims 1 to 3
characterised in that
the liquid metal electrode is recycled after the separation of the americium metal.

**4.** An apparatus for carrying out the process according to one of claims 1 to 4 comprising a double glove-box, an argon purification unit, a heating well fitted into the bottom of the inner glove-box, an outer box for the preparation of the basic substances and a lead shielding.

Fig. 1

Figure 2